# EUROPEAN PATENT SPECIFICATION

(11) **EP 2 552 055 B1**
(45) Date of publication and mention of the grant of the patent: **22.03.2017**
(21) Application number: 11175310.9
(22) Date of filing: 26.07.2011
(51) Int. Cl.: H04L 12/28, G01D 4/00, H04L 29/08, H04L 29/06, H04W 12/06

(54) **Registration of an electronic device with HAN capabilities with a home area network**
Registrierung einer elektronischen Vorrichtung mit Heimnetzwerkfähigkeit mit einem Heimnetzwerk
Enregistrement d'un dispositif électronique avec des capacités de réseau domestique avec un réseau local domestique

(43) Date of publication of application: 30.01.2013
(73) Proprietor: Itron Metering Solutions UK Ltd, Felixstowe, Suffolk IP11 2ER (GB)
(72) Inventor: Field, Anthony, Suffolk, IP6 9NR (GB); White, Richard, Ipswich, IP3 8TS (GB)
(74) Representative: Howson, Richard G.B.

(56) References cited:
- WO-A1-2009/067250
- WO-A2-2008/033287
- US-A1- 2006 190 731
- US-A1- 2007 079 123
- US-A1- 2007 097 878
- US-B1- 7 072 945

## Description

The invention relates to a joining method for enabling an electronic device with HAN capacities to register with a Home Area Network comprising a HAN coordinator device, and to corresponding HAN coordinator device and electronic device with HAN capacities.

In the area of home area networking, there is an issue currently with being able to transport information in an out of band way from a joining device in a wireless network to the coordinator/trust centre. The joining mechanism has to be such that there is no doubt that the device trying to join the home area network passes its information to the correct HAN coordinator device, and consequently joins the correct home area network. Various ways are available currently through back haul systems, local specialist installation tools or complicated alpha numerical entry systems. For instance, a know mechanism consists in passing an installation code corresponding to an encrypted piece of date printed on the outside of the joining device to the back haul head end system which decodes the install code into a link key. The link key has then to be transmitted to the HAN coordinator device in a secure way for giving authorisation for the device bearing this code permission to join the home area network. Alternatively, the user has to type the installation code into a website belonging to the owner of the network coordinator device, which can in turn decode the installation code and pass the link key to the HAN coordinator device.

Consequently, none of the existing solutions provide a simple way of performing a joining mechanism entirely locally while maintaining the high level of security needed in such networks. There is thus a need to provide a mechanism which would allow very simple and cost effective joining while still maintaining security protocols.

US 2007/0079123 discloses a technique to register a client to a server for communication. A message containing an identification (ID) code is transmitted to a server. If the key is stored in the server, the key encrypted with the ID code is received from the server via a network. The encrypted key is decrypted using the identification code. Otherwise, the key is encrypted using the ID code. The encrypted key is transmitted to the server via the network. Information is exchanged with the server via the network. The information is encrypted and decrypted by the key.

To this end, the invention proposes a joining method for enabling an electronic device with HAN capacities to register with a Home Area Network comprising a HAN coordinator device, through the transmission of a piece of encoded information corresponding to an installation code, wherein said piece of encoded information encoded using an algorithm known to the HAN coordinator device (1), and said piece of encoded information is transmitted directly from said electronic device to said HAN coordinator device through a short range wireless optical communication link between optical transmitting means provided on said electronic device and optical receiving means provided on said HAN coordinator device, wherein the piece of encoded information is received by the HAN coordinator device and decoded as a link key for allowing, by the HAN coordinator device, the electronic device to join the Home Area Network.

According to some additional advantageous features of the invention:
- the transmission of the piece of encoded information may be triggered by a user's action on a press button provided on the electronic device;
- the joining method further comprises an initiation step in which the optical receiving means are settled into a listening mode;
- the HAN coordinator device is a smart utility meter, and the piece of encoded information is transmitted according to the IEC 62056 series of standards.

The invention also relates to a HAN coordinator device, characterized in that it comprises optical receiving means adapted to receive a piece of encoded information corresponding to an installation code and transmitted through a short range wireless optical communication link from an electronic device with HAN capacities in order to authorize said electronic device to join the HAN, wherein the piece of encoded information is encoded using an algorithm known to the HAN coordinator device and the HAN coordinator device is arranged to decode the piece of encoded information as a link key for joining the HAN.

Also disclosed is an electronic device with HAN capacities characterized in that it comprises optical transmitting means adapted to transmit a piece of encoded information corresponding to an installation code directly to a HAN coordinator device through a short range wireless optical communication link in order to get authorization to join the HAN.

These and other features of the invention will now be more fully disclosed in the following description with reference to the accompanying drawings, in which:
- Figure 1 schematically illustrates the registration of an in home display device with a smart meter acting as a HAN coordinator device, according to a possible implementation of the joining method of the invention;
- Figure 2 schematically illustrates a generalization of the invention to the registration of any electronic device with HAN capacities with any other electronic device acting as a HAN coordinator device.

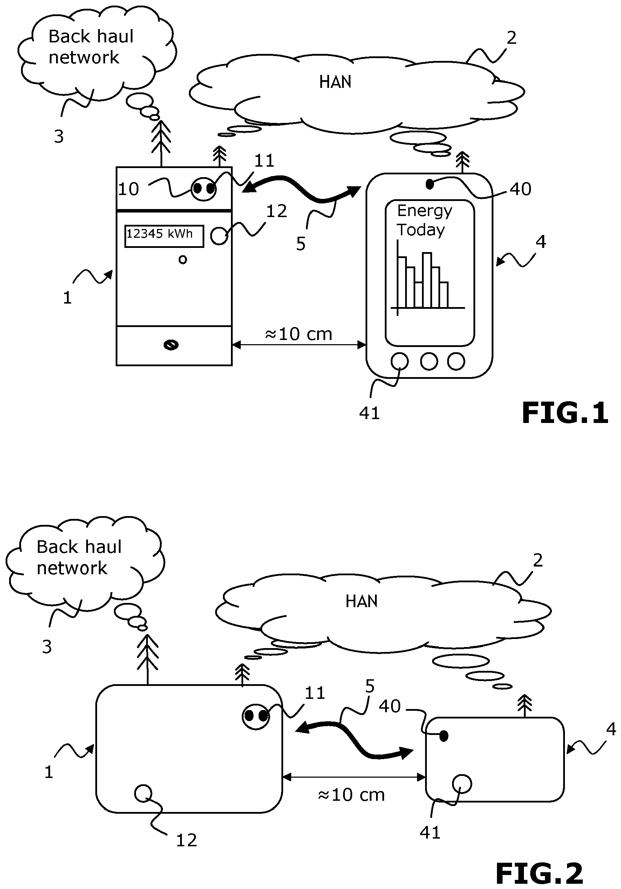

With reference to figure 1, a smart utility meter 1 is shown as acting as a HAN coordinator device for a home area network 2. To this end, smart utility meter 1 has HAN capabilities, for instance according to ZigBee protocol, symbolized by an antenna for bidirectional communications with HAN 2. Smart utility meter has also WAN capacities for bidirectional exchanges with a back haul network 3, for instance through GPRS communications.

Figure 1 also illustrates an electronic device to be registered with HAN 2, e.g. an in home display 4 with HAN capabilities, as symbolized an antenna for bidirectional communications with HAN 2. Registration requires as stated above the transmission of a piece of encoded information corresponding to an installation code which uniquely identifies electronic device 2. This installation code is generally printed on the device, and also stored in a memory of this device.

The basis of the joining method according to the present invention is to use an industry standard optical port 10 provided on some electricity meters or other electronic devices today. Currently this optical port 10, which follows the IEC 62056 series of standards, is used in transmit and receive mode with sign on facility for the purpose of local configuration of electricity meters and other devices (such as gas meters, communications hubs, heat meters) through the use of a handheld configuration device. More precisely, a security mechanism used in FLAG and DLMS/COSEM (Device Language Message Specification/Companion Specification for Energy Metering) based communications with metering equipment in the market today ensures that the handheld configuration device with the meter is authorised to do so.

According to the invention, the piece of encoded information corresponding to the installation code is transmitted directly from in home display 4 to smart utility meter acting as HAN coordinator device 1 through a short range wireless optical communication link 5 between optical transmitting means 40 provided on in home display 4 and optical receiving means 11 included on optical port 10 of smart utility meter 1.

Optical transmitting means 40 are typically an infra red electroluminescent diode with maximum coverage range of substantially 10 meters.

The joining process is consequently the following one:
- the user has to place the optical transmitting means of in home display 4 in close proximity with the optical receiving means of HAN coordinator device 1;
- For energy consumption saving purpose, the joining process is preferably initiated at the smart utility meter by settling optical receiving means 11 into a listening mode for a limited time. This can be performed through actuation of initiation means 12, such a specific press button on the meter. Alternatively, initiation step could involve entering of a pin, or use of a magnet in front of the coordinator device.
- the piece of encoded information corresponding to the installation code stored in display 4 can then be transmitted from optical transmitting means 40 to optical receiving means 11 over the short range wireless optical link 5. The transmission is preferably triggered by a user's action, for instance the actuation of a specific press button 41 provided on display 4.

The installation code printed on the joining device (and stored inside) is encrypted using a standard algorithm known to coordinator device 1, and decoded as a link key. This link key is what is used by the joining device to join the network at the most basic and first level (not allowing it to see any data on the network). This "link key" could just be a random piece of data and is of variable length depending on the implementation.

When receiving the piece of encoded information on its optical receiving means 11, smart utility meter 1 knows that in home display 4 is allowed to join HAN 2, due to its proximity (in the maximum range of the optical link) and the action(s) performed by the user on press buttons 12 and 41.

After this initial handshake has taken place, a further high security joining process can optionally takes place involving for instance Certificate Based Key Establishment (CBKE).

The joining method according to the invention can be generalized to any generic device supporting HAN communications and that need to be authenticated during a joining process through the passing of data from a joining device to a coordinating device via an out of band mechanism. This is shown on figure 2 where device 1 is any electronic device having an integral WAN module (not shown) that allows it to talk to back haul network 3 and an integral HAN module (not shown) that allows it to talk to other HAN devices, and device 4 is any electronic device with HAN capabilities. In this exemplary case, device 1, e.g. a stand alone WAN communications hub, is acting as a coordinating device on HAN 2 and device 4 is a device wanting to join the HAN.

Thanks to the invention, an end consumer can simply purchase a device of the shelf that he can join to his home area network without need to reconfigure the trust centre from a back haul system, or to have access to any special installation tools.

## Claims

1. A joining method for enabling an electronic device (4) with Home Area Network, HAN, capabilities to register with a Home Area Network (2) comprising a HAN coordinator device (1), through the transmission of a piece of encoded information corresponding to an installation code, wherein said piece of encoded information is encoded using an algorithm known to the HAN coordinator device (1), and said piece of encoded information is transmitted directly from said electronic device (4) to said HAN coordinator device (1) through a short range wireless optical communication link (5) between optical transmitting means (40) provided on said electronic device (4) and optical receiving means (11) provided on said HAN coordinator device (1), wherein the piece of encoded information is received by the HAN coordinator device (1) and decoded as a link key for allowing, by the HAN coordinator device (1), the electronic device (4) to join the Home Area Network (2).

2. A joining method according to claim 1, wherein the transmission of said piece of encoded information is triggered by a user's action on a press button (41) provided on said electronic device (4).

3. A joining method according to any one of claims 1 and 2, further comprising an initiation step in which said optical receiving means (11) are settled into a listening mode.

4. A joining method according to any one of claims 1 to 3, wherein said HAN coordinator device (1) is a smart utility meter, and said piece of encoded information is transmitted according to the IEC 62056 series of standards.

5. A Home Area Network, HAN, coordinator device (1), **characterized in that** it comprises optical receiving means (11) adapted to receive a piece of encoded information corresponding to an installation code transmitted through a short range wireless optical communication link (5) from an electronic device (4) with HAN capabilities in order to authorize said electronic device (4) to join the HAN, wherein the piece of encoded information is encoded using an algorithm known to the HAN coordinator device (1) and the HAN coordinator device (1) is arranged to decode the piece of encoded information as a link key for allowing said electronic device (4) to join the HAN.

6. A HAN coordinator device (1) according to claim 5, **characterized in that** said HAN coordinator device (1) is a smart utility meter with integral WAN and HAN capacities, and **in that** said optical receiving means (11) are part of a IEC 62056 standardized optical port (10).

7. A HAN coordinator device (1) according to claim 5, **characterized in that** said HAN coordinator device (1) is a stand alone WAN communication hub with integral WAN and HAN capacities.

8. A HAN coordinator device (1) according to claim 5, **characterized in that** it comprises initiation means (12) adapted to settle said optical receiving means (11) into a listening mode.

## Patentansprüche

1. Verbindungsverfahren, um eine elektronische Vorrichtung (4) mit Heimnetzwerk-, HAN (vom engl. Home Area Network),-Fähigkeiten, sich bei einem Heimnetzwerk (2), das eine HAN-Koordinatorvorrichtung (1) aufweist, durch Senden eines Stückes codierter Information, die einem Installationscode entspricht, anzumelden, wobei das Stück codierter Information unter Verwendung eines der HAN-Koordinatorvorrichtung (1) bekannten Algorithmus codiert wird und das Stück codierter Information über eine drahtlose, optische Nahbereich-Kommunikationsverbindung (5) zwischen optischen Sendemitteln (40), die an der elektronischen Vorrichtung (4) vorgesehen sind, und optischen Empfangsmitteln (11), die an der HAN-Koordinatorvorrichtung (1) vorgesehen sind, an die HAN-Koordinatorvorrichtung (1) gesendet wird, wobei das Stück codierter Information von der HAN-Koordinatorvorrichtung (1) empfangen und als ein Verbindungsschlüssel decodiert wird, um durch die HAN-Koordinatorvorrichtung (1) zu ermöglichen, dass sich die elektronische Vorrichtung (4) mit dem Heimnetzwerk (2) verbindet.

2. Verbindungsverfahren nach Anspruch 1, wobei das Senden des Stückes codierter Information durch eine Benutzeraktivität an einem an der elektronischen Vorrichtung (4) vorgesehenen Druckknopf (41) ausgelöst wird.

3. Verbindungsverfahren nach einem der Ansprüche 1 und 2, ferner aufweisend einen Initiierungsschritt, in dem die optischen Empfangsmittel (11) in einen Zuhörmodus versetzt werden.

4. Verbindungsverfahren nach einem der Ansprüche 1 bis 3, wobei die HAN-Koordinatorvorrichtung (1) ein intelligenter Betriebsmittelzähler ist und das Stück codierter Information im Einklang mit der Normenreihe IEC 62056 gesendet wird.

5. Heimnetzwerk-, HAN,-Koordinatorvorrichtung (1), **dadurch gekennzeichnet, dass**
sie optische Empfangsmittel (11) aufweist, die dazu geeignet sind, ein Stück codierter Information zu empfangen, die einem Installationscode entspricht, der über eine drahtlose, optische Nahbereich-Kommunikationsverbindung (5) von einer elektronischen Vorrichtung (4) mit HAN-Fähigkeiten gesendet wird, um die elektronische Vorrichtung (4) zu autorisieren, sich mit dem HAN zu verbinden, wobei das Stück codierter Information unter Verwendung eines der HAN-Koordinatorvorrichtung (1) bekannten Algorithmus codiert wird und die HAN-Koordinatorvorrichtung (1) eingerichtet ist, um das Stück codierter Information als einen Verbindungsschlüssel zu decodieren, um zu ermöglichen, dass sich die elektronische Vorrichtung (4) mit dem HAN verbindet.

6. HAN-Koordinatorvorrichtung (1) nach Anspruch 5,
**dadurch gekennzeichnet, dass**
die HAN-Koordinatorvorrichtung (1) ein intelligenter Betriebsmittelzähler mit eingebauten WAN- und HAN-Fähigkeiten ist, und dass die optischen Empfangsmittel (11) Teil eines im Einklang mit IEC 62056 standardisierten optischen Anschlusses (10) sind.

7. HAN-Koordinatorvorrichtung (1) nach Anspruch 5,
**dadurch gekennzeichnet, dass**
die HAN-Koordinatorvorrichtung (1) ein eigenständiger WAN-Kommunikationsnetzknoten mit eingebauten WAN- und HAN-Fähigkeiten ist.

8. HAN-Koordinatorvorrichtung (1) nach Anspruch 5,
**dadurch gekennzeichnet, dass**
sie Initiierungsmittel (12) aufweist, die dazu geeignet sind, die optischen Empfangsmittel (11) in einen Zuhörmodus zu versetzen.

## Revendications

1. Procédé de jonction pour activer un dispositif électronique (4) avec des capacités de réseau domestique HAN (Réseau local domestique), pour l'enregistrer avec un réseau local domestique (2) comprenant un dispositif coordinateur HAN (1), par la transmission d'une information codée correspondant à un code d'installation, dans lequel ladite information codée est codée à l'aide d'un algorithme connu du dispositif coordinateur HAN (1), et ladite information codée est transmise directement depuis ledit dispositif électronique (4) jusqu'audit dispositif coordinateur HAN (1) par le biais d'une liaison de communication optique sans fil à courte distance (5) entre le moyen de transmission optique (40) prévu sur ledit dispositif électronique (4) et le moyen de réception optique (11) prévu sur ledit dispositif coordinateur HAN (1), dans lequel l'information codée est reçue par le dispositif coordinateur HAN (1) et décodée en tant que clé de liaison pour autoriser, par le dispositif coordinateur HAN (1), le dispositif électronique (4) à rejoindre le Réseau local domestique (2).

2. Procédé de jonction selon la revendication 1, dans lequel la transmission de ladite information codée est déclenchée par l'action d'un utilisateur sur un bouton-poussoir (41) prévu sur ledit dispositif électronique (4).

3. Procédé de jonction selon une quelconque des revendications 1 et 2, comprenant en outre une étape d'initiation dans laquelle ledit moyen de réception optique (11) est installé dans un mode d'écoute.

4. Procédé de jonction selon une quelconque des revendications 1 à 3, dans lequel ledit dispositif coordinateur HAN (1) est un compteur intelligent pour servitudes, et ladite information codée est transmise selon les normes CEI 62056.

5. Dispositif coordinateur (1) de réseau local domestique, HAN, **caractérisé en ce qu'**il comprend un moyen de réception optique (11) adapté pour recevoir une information codée correspondant à un code d'installation transmis par le biais d'une liaison de communication optique sans fil à courte distance (5) depuis un dispositif électronique (4) avec des capacités HAN afin d'autoriser ledit dispositif électronique (4) à rejoindre le réseau HAN, dans lequel l'information codée est codée en utilisant un algorithme connu du dispositif coordinateur HAN (1) et le dispositif coordinateur HAN (1) est agencé pour décoder l'information codée en tant que clé de liaison pour autoriser ledit dispositif électronique (4) à rejoindre le réseau HAN.

6. Dispositif coordinateur HAN (1) selon la revendication 5, **caractérisé en ce que** ledit dispositif coordinateur HAN (1) est un compteur intelligent pour servitudes avec des capacités de réseau étendu (WAN) et domestique (HAN) intégrées, et **en ce que** ledit moyen de réception optique (11) est un élément d'un port optique normalisé CEI 62056 (10).

7. Dispositif coordinateur HAN (1) selon la revendication 5, **caractérisé en ce que** ledit dispositif coordinateur HAN (1) est un hub de communication WAN autonome avec des capacités WAN et HAN intégrées.

8. Dispositif coordinateur HAN (1) selon la revendication 5, **caractérisé en ce qu'**il comprend un moyen d'initiation (12) adapté pour installer ledit moyen de réception optique (11) dans un mode d'écoute.
